# EUROPEAN PATENT APPLICATION

(11) **EP 4 708 593 A1**
(43) Date of publication of application: **11.03.2026**
(21) Application number: 25201323.0
(22) Date of filing: 10.09.2025
(51) Int. Cl.: H02B 1/36, H02B 11/02, H02B 11/173

(54) **ELECTRICAL CABINET**

(30) Priority: 10.09.2024 CN 202422218738 U
(71) Applicant: Schneider (Xi'an) Innovation Technology Co., Ltd., Shaanxi 710076 (CN)
(72) Inventor: LUO, Lingjun, Shaanxi, 710076 (CN); QIANG, Yanli, Shaanxi, 710076 (CN); GAO, Jin, Shaanxi, 710076 (CN); WANG, Chao, Shaanxi, 710076 (CN)
(74) Representative: Manitz Finsterwald Patent- und Rechtsanwaltspartnerschaft mbB

(57) **Abstract**

Embodiments of the present disclosure provide an electrical cabinet. The electrical cabinet includes a frame; a mating assembly disposed on the frame; a drawer assembly including a fixing part disposed on the frame and a movable part connected to the fixing part, wherein the movable part is pushed in or pulled out relative to the frame; and a counter connected to the movable part and including a rotating arm adapted to be driven by the mating assembly to switch between an initial position and a counting position during a process of the movable part being pushed in relative to the frame.

## Description

### FIELD

Embodiments of the present disclosure generally relate to the technical field of electrical equipment, and more particularly, to an electrical cabinet.

### BACKGROUND

An electrical cabinet is a conventional electrical device, which has a drawer-type structure, so that installation and maintenance become more convenient. A drawer is usually used to install various electrical components and devices to achieve power distribution, control, and protection functions.

During a use of the electrical cabinet, the drawer is frequently plugged and unplugged. However, the conventional electrical cabinet cannot display the number of times of plugging and unplugging the drawer.

### SUMMARY

An object of the present disclosure is to provide an electrical cabinet to at least partially solve the above problems.

In one aspect of the present disclosure, an electrical cabinet is provided, the electrical cabinet including a frame; a mating assembly disposed on the frame; a drawer assembly including a fixing part disposed on the frame and a movable part connected to the fixing part, where the movable part is adapted to be pushed in or pulled out relative to the frame; and a counter connected to the movable part and including a rotating arm adapted to be driven by the mating assembly to switch between an initial position and a counting position during a process of the movable part being pushed in relative to the frame.

According to embodiments of the present disclosure, since the counter can move along with the movable part and the mating assembly is arranged on the frame, during the process of the movable part being pushed in relative to the frame, the mating assembly can drive the rotating arm to rotate from the initial position to the counting position, thereby achieving the counting function.

In some embodiments, the mating assembly includes a mounting member disposed on the frame and a driving member connected to the mounting member, the rotating arm is adapted to be driven by the driving member during the process of the movable part being pushed in relative to the frame.

In some embodiments, the mounting member includes at least two first mounting holes spaced apart in a first direction, the frame includes a plurality of mating holes spaced apart in the first direction, and a spacing between adjacent ones of the at least two first mounting holes is equal to a spacing between adjacent ones of the plurality of mating holes.

In some embodiments, a part of the counter is disposed in the movable part, the movable part includes a first side plate, a second side plate, a third side plate, and a fourth side plate, the first side plate and the second side plate are disposed opposite to each other, the third side plate and the fourth side plate are disposed opposite to each other, the first side plate includes a through hole, and the rotating arm passes out of the movable part through the through hole and is adapted to rotate in the through hole.

In some embodiments, the mounting member further includes a second mounting hole, and the driving member is mated with the second mounting hole and adapted to pass out of the second mounting hole.

In some embodiments, an end of the driving member passing out of the second mounting hole is mated with an end of the rotating arm passing out of the through hole and spaced apart from an outer side surface of the first side plate.

In some embodiments, the second side plate includes at least one first wiring part, the fixing part includes at least one second wiring part, and when the at least one first wiring part is moved into contact with the at least one second wiring part, the driving member and the rotating arm are spaced apart from each other.

In some embodiments, the second side plate includes at least one first wiring part, the fixing part includes at least one second wiring part, and when the at least one first wiring part is moved into contact with the at least one second wiring part, the driving member is in contact with the rotating arm.

In some embodiments, the third side plate and the fourth side plate are disposed in a direction in which the movable part is pulled out, the third side plate includes a plurality of third wiring parts, the fixing part includes a plurality of fourth wiring parts, and when the plurality of third wiring parts are moved to be conducted with the plurality of fourth wiring parts, the rotating arm is driven to the counting position.

In some embodiments, the counter is disposed closer to the fourth side plate than to the third side plate.

It should be understood that the content described in this section is not intended to limit the key features or important features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, where:
FIG. 1 illustrates a schematic structural diagram of an electrical cabinet according to some embodiments of the present disclosure;
FIG. 2 illustrates an enlarged schematic diagram of portion A of the electrical cabinet shown in FIG. 1;
FIG. 3 illustrates a schematic structural diagram of a counter according to some embodiments of the present disclosure;
FIG. 4 illustrates a schematic structural diagram of a mounting member of a mating assembly according to some embodiments of the present disclosure;
FIG. 5 is a schematic diagram illustrating mating between a driving member and a rotating arm of a mating assembly according to some embodiments of the present disclosure, where the rotating arm is in an initial position;
FIG. 6 is a schematic diagram illustrating mating between a driving member and a rotating arm according to some embodiments of the present disclosure, where the rotating arm is in a counting position.

### Description of reference numerals:

100 is an electrical cabinet;
1 is a frame, and 11 is a mating hole;
2 is a mating assembly, 21 is a mounting member, 211 is a first mounting hole, 212 is a second mounting hole, and 22 is a driving member;
3 is a drawer assembly, 31 is a fixing part, 311 is a second wiring part, 312 is a fourth wiring part, 313 is a sliding protrusion, 32 is a movable part, 321 is a first side plate, 3211 is a through hole, 322 is a second side plate, 3221 is a first wiring part, 323 is a third side plate, 3231 is a third wiring part, 324 is a fourth side plate, 325 is a bottom plate, and 326 is a sliding wheel;
4 is a counter, and 41 is a rotating arm;
X is a first direction.

### DETAILED DESCRIPTION

Embodiments of the present disclosure will be described in more detail below with reference to the accompanying drawings. While the embodiments of the present disclosure are shown in the drawings, it should be understood that the present disclosure may be implemented in various forms and should not be limited by the embodiments set forth herein. Rather, these embodiments are provided to make this disclosure more thorough and complete, and to fully convey the scope of the present disclosure to those skilled in the art.

As used herein, the term "including" and variations thereof represent openness, i.e., "including but not limited to". Unless specifically stated, the term "or" means "and/or". The term "based on" means "based at least in part on". The terms "an example embodiment" and "an embodiment" mean "at least one example embodiment". The term "another embodiment" means "at least one further embodiment". The terms "first," "second," and the like may refer to different or identical objects.

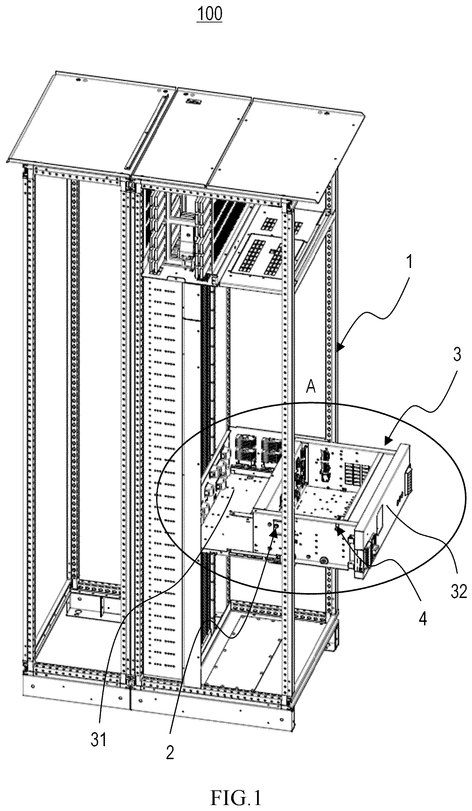

As described above, during the use of the electrical cabinet, the drawer is frequently plugged and unplugged. However, the conventional electrical cabinet cannot display the number of times of plugging and unplugging the drawer. In addition, the number of cycles of plugging and unplugging the drawer should be ensured to be within a safe number of times, for example, no more than 200 times, otherwise, double clamps of the fixing part of the drawer and a silver-plated layer of a plug-in copper bar of the movable part may fall off and oxidize, which will bring a problem of increased contact resistance here, and then lead to an increased temperature rise, thereby damaging the drawer device, and even causing personal injury to an operator. Embodiments of the present disclosure provide an electrical cabinet 100 to at least partially solve the above problems. Hereinafter, the principles of the present disclosure will be described with reference to FIG. 1 to FIG. 6.

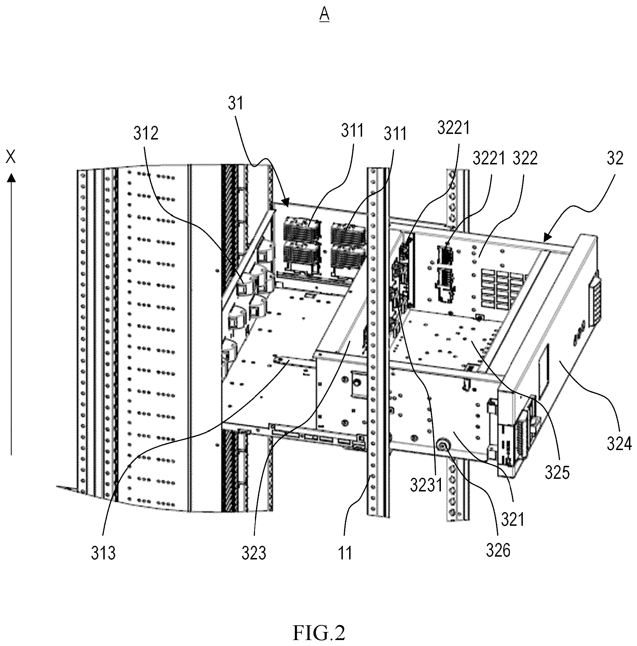

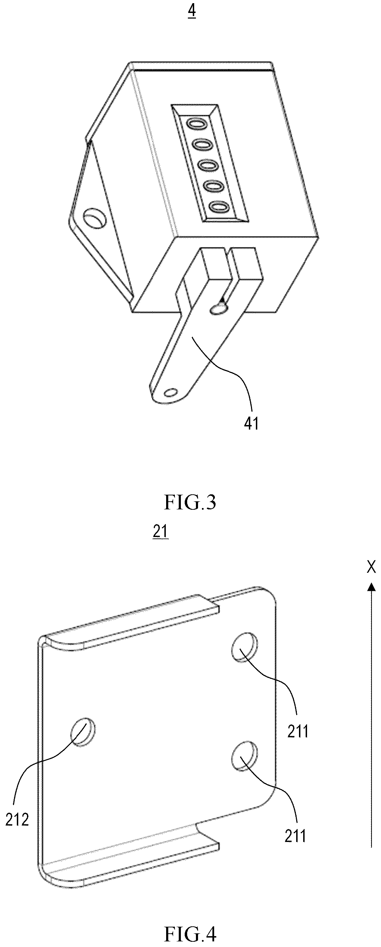

FIG. 1 illustrates a schematic structural diagram of an electrical cabinet 100 according to some embodiments of the present disclosure. FIG. 2 illustrates an enlarged schematic diagram of portion A of the electrical cabinet 100 shown in FIG. 1. FIG. 3 illustrates a schematic structural diagram of a counter 4 according to some embodiments of the present disclosure. As shown in FIGS. 1-3, the electrical cabinet 100 described herein generally includes a frame 1, a mating assembly 2, a drawer assembly 3, and a counter 4.

With continued reference to FIGS. 1-3, in some embodiments, the mating assembly 2 is disposed on the frame 1. The drawer assembly 3 includes a fixing part 31 and a movable part 32. The fixing part 31 is disposed on the frame 1. The movable part 32 is connected to the fixing part 31, and the movable part 32 can be pushed in or pulled out relative to the frame 1. The counter 4 is connected to the movable part 32, so that when the movable part 32 moves, the counter 4 can move along with the movable part 32. The counter 4 includes a rotating arm 41 which can be mated with the mating assembly 2 to switch between an initial position and a counting position. When the rotating arm 41 is in the initial position, the rotating arm 41 is not subjected to a force from the mating assembly 2. When the rotating arm 41 rotates to the counting position, the counter 4 can complete the counting once.

The counter 4 according to embodiments of the present disclosure may be connected to the movable part 32 in any manner, which is not limited in embodiments of the present disclosure. For example, in some embodiments, the counter 4 may be connected to the movable part 32 directly or through an intermediate connecting member (not shown).

During the movable part 32 being pushed in relative to the frame 1, the rotating arm 41 can move toward the mating assembly 2, and the rotating arm 41 can be driven by the mating assembly 2 to switch from the initial position to the counting position. During the movable part 32 being pulled out relative to the frame 1, the rotating arm 41 moves away from the mating assembly 2, and the rotating arm 41 can be separated from the mating assembly 2 to reset from the counting position to the initial position.

According to the embodiments of the present disclosure, since the counter 4 can move along with the movable part 32, and the mating assembly 2 is disposed on the frame 1, during the process of the movable part 32 being pushed in relative to the frame 1,the mating assembly 2 can drive the rotating arm 41 to rotate to the counting position, thereby achieving counting. In addition, during the movable part 32 being pulled out relative to the frame 1, the rotating arm 41 can be separated from the mating assembly 2 to reset from the counting position to the initial position, thereby achieving cycle counting.

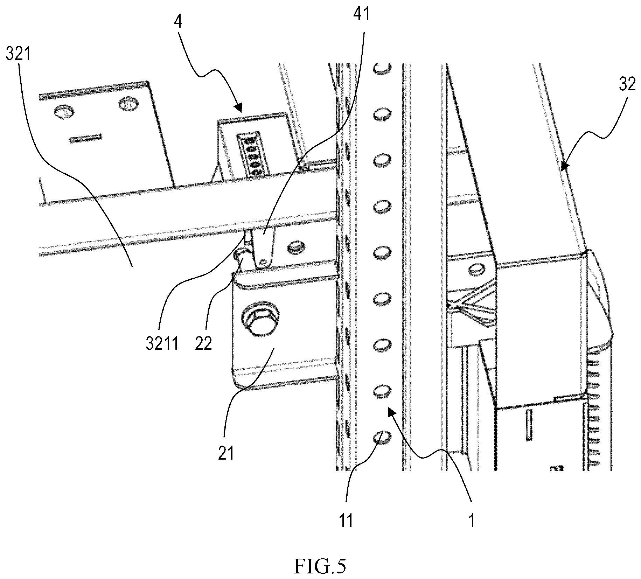

FIG. 4 illustrates a schematic structural diagram of a mounting member 21 of the mating assembly 2 according to some embodiments of the present disclosure. FIG. 5 is a schematic diagram illustrating mating between the driving member 22 of the mating assembly 2 and the rotating arm 41 according to some embodiments of the present disclosure, where the rotating arm 41 is in the initial position. As shown in FIGS. 4-5, in some embodiments, the mating assembly 2 may include a mounting member 21 and a driving member 22. The mounting member 21 may be disposed on the frame 1. The driving member 22 may be connected to the mounting member 21.

During the process of the movable part 32 being pushed in relative to the frame 1, the rotating arm 41 can move toward the driving member 22, and after the rotating arm 41 contacts the driving member 22, the rotating arm 41 can be driven by the driving member 22 to switch from the initial position to the counting position. During the process of the movable part 32 being pulled out relative to the frame 1, the rotating arm 41 can move away from the driving member 22, and the rotating arm 41 can be separated from the driving member 22 to reset from the counting position to the initial position.

The mounting member 21 according to embodiments of the present disclosure may be disposed on the frame 1 in any manner, which is not limited in embodiments of the present disclosure. For example, referring to FIGS. 2 and 4-5, in some embodiments, the mounting member 21 may include at least two first mounting holes 211, and the at least two first mounting holes 211 may be spaced apart in a first direction X. Correspondingly, the frame 1 may include a plurality of mating holes 11, and the plurality of mating holes 11 may also be spaced apart in the first direction X. A spacing between adjacent first mounting holes 211 may be equal to a spacing between adjacent mating holes 11.

Therefore, after the first mounting holes 211 are aligned with the corresponding mating holes 11, the mounting member 21 can be mounted on the frame 1 by fastening with fasteners such as bolts. In addition, a mounting position of the mounting member 21 on the frame 1 can be adjusted, so that when a moving distance of the movable part 32 is unchanged, a rotation angle of the rotating arm 41 can be changed, thereby preventing the rotating arm 41 from rotating beyond its stroke and causing damage to the counter 4.

With continued reference to FIGS. 4-5, the mounting member 21 may further include a second mounting hole 212. The driving member 22 may be mounted via the second mounting hole 212 for interacting with the rotating arm 41.

The driving member 22 according to embodiments of the present disclosure may be various types of driving members 22 currently known or available in the future, which is not limited in embodiments of the present disclosure. For example, referring to FIG. 5, in some embodiments, the driving member 22 may include a driving bolt. Correspondingly, the second mounting hole 212 may include a threaded hole. The driving bolt may be mated with the threaded hole through threads.

Referring to FIGS. 2 and 3, in some embodiments, a part of the counter 4 is disposed in the movable part 32. The movable part 32 may include a first side plate 321, a second side plate 322, a third side plate 323, a fourth side plate 324, and a bottom plate 325. The first side plate 321 and the second side plate 322 are disposed on the bottom plate 325 opposite to each other. The third side plate 323 and the fourth side plate 324 are disposed on the bottom plate 325 opposite to each other. Referring to FIG. 5, the first side plate 321 may include a through hole 3211, the rotating arm 41 passes out of the movable part 32 through the through hole 3211 and is adapted to rotate in the through hole 3211. That is, the part of the rotating arm 41 is located outside the movable part 32 for interacting with the driving member 22.

With continued reference to FIG. 5, further, an end of the driving member 22 passing out of the second mounting hole 212 may be mated with an end of the rotating arm 41 passing out of the through hole 3211. In addition, the end of the driving member 22 passing out of the second mounting hole 212 may be spaced apart from an outer side surface of the first side plate 321 to prevent the driving member 22 from interfering with the movement of the movable part 32.

Referring back to FIG. 2, in some embodiments, a sliding protrusion 313 is disposed on the fixing part 31, and correspondingly, a sliding groove (not shown) is disposed on the bottom plate 325. The sliding protrusion 313 can be mated with the sliding groove to enable the movable part 32 to move relative to the fixing part 31. In addition, the first side plate 321 and the second side plate 322 may be provided with a sliding wheel 326. The sliding wheel 326 may slide on the fixing part 31 to enable the movable part 32 to move relative to the fixing part 31.

With continued reference to FIGS. 2 and 5, in some embodiments, the second side plate 322 may include at least one first wiring part 3221. The fixing part 31 may include at least one second wiring part 311. The first wiring part 3221 and the second wiring part 311 are part of a secondary loop. When the at least one first wiring part 3221 is moved into contact with the at least one second wiring part 311, the driving member 22 and the rotating arm 41 may be spaced apart from each other, that is, the driving member 22 is not in contact with the rotating arm 41 yet. Alternatively, when the at least one first wiring part 3221 moves into contact with the at least one second wiring part 311, the driving member 22 may just be in contact with the rotating arm 41. Alternatively, when the at least one first wiring part 3221 moves into contact with the at least one second wiring part 311, the driving member 22 may drive the rotating arm 41 to rotate by a certain angle, but the rotating arm 41 does not rotate to the counting position.

With continued reference to FIGS. 2 and 5, in some embodiments, the third side plate 323 and the fourth side plate 324 may be disposed in a direction in which the movable part 32 is pulled out. The third side plate 323 may include a plurality of third wiring parts 3231, and the fixing part 31 may include a plurality of fourth wiring parts 312. The third wiring parts 3231 and the fourth wiring parts 312 are part of a primary loop. When the plurality of third wiring parts 3231 are moved to be conducted with the plurality of fourth wiring parts 312, the rotating arm 41 is driven to the counting position, and the counter 4 can complete the counting once.

Referring back to FIGS. 2-3, in some embodiments, the counter 4 is disposed closer to the fourth side plate 324 than to the third side plate 323. Thus, during the process of the movable part 32 being pushed in, the counter 4 can be triggered by the driving member 22 at a later time to reduce the rotation angle of the rotating arm 41, thereby avoiding damage to the counter 4.

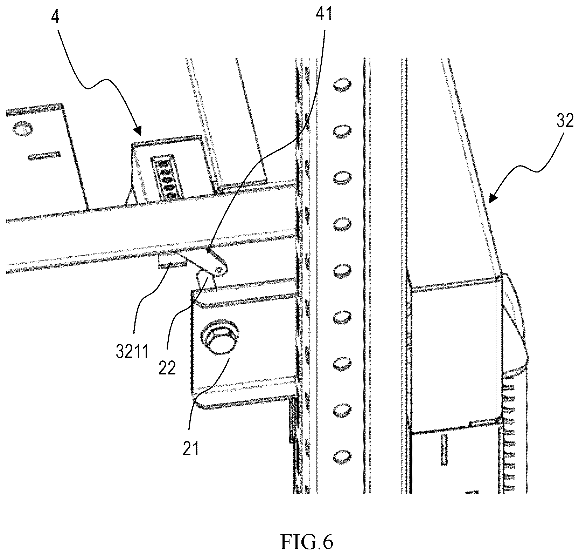

FIG. 6 is a schematic diagram illustrating mating between the driving member 22 and the rotating arm 41 according to some embodiments of the present disclosure, where the rotating arm 41 is in the counting position. A relative positional relationship between the driving member 22 and the rotating arm 41 and a relative positional relationship between the corresponding wiring parts during the process of the drawer assembly 3 of the electrical cabinet 100 being pushed in according to some embodiments of the present disclosure will be described below with reference to FIGS. 2, 5 and 6.

First, as shown in FIG. 2, the movable part 32 of the drawer assembly 3 is not pushed in yet. At this time, the rotating arm 41 is in the initial position, the first wiring part 3221 is not in contact with the corresponding second wiring part 311, and the third wiring part 3231 is not in contact with the corresponding fourth wiring part 312.

Subsequently, the movable part 32 is pushed inward to move a first distance, at this time, the first wiring part 3221 is just in contact with the corresponding second wiring part 311, but the driving member 22 and the rotating arm 41 are spaced apart from each other, that is, the driving member 22 is not in contact with the rotating arm 41.

Subsequently, as shown in FIG. 5, the movable part 32 is continuously pushed inward to move a second distance, and at this time, the rotating arm 41 just moves to a position where it contacts the driving member 22. Since the first wiring part 3221 can slide on the corresponding second wiring part 311, the first wiring part 3221 is always in contact with the corresponding second wiring part 311.

Subsequently, as shown in FIG. 6, the movable part 32 is continuously pushed inward to move a third distance, at this time, the third wiring part 3231 is conducted with the corresponding fourth wiring part 312, and the movable part 32 is pushed to a maximum distance. Meanwhile, the driving member 22 drives the rotating arm 41 to rotate to the counting position, and the first wiring part 3221 is always in contact with the corresponding second wiring part 311.

It should be noted that the process of the movable part 32 of the drawer assembly 3 being pulled out relative to the frame 1 is similar to the process described above, and details are not described herein again.

The counting design according to embodiments of the present disclosure may be applied to various electrical cabinets 100 to at least partially solve the above problems. It should be understood that the counting design according to embodiments of the present disclosure may also be applied to other components, which is not limited in embodiments of the present disclosure.

Various embodiments of the present disclosure have been described above, which are illustrated, not exhaustive, and are not limited to the embodiments disclosed. Many modifications and variations will be apparent to those of ordinary skill in the art without departing from the scope of the illustrated embodiments. The selection of the terms used herein is intended to best explain the principles of the embodiments, practical applications, or technical improvements in the marketplace, or to enable others of ordinary skill in the art to understand the embodiments disclosed herein.

## Claims

1. An electrical cabinet (100), **characterized by** comprising:
a frame (1);
a mating assembly (2) disposed on the frame (1);
a drawer assembly (3) comprising a fixing part (31) disposed on the frame (1) and a movable part (32) connected to the fixing part (31), wherein the movable part (32) is adapted to be pushed in or pulled out relative to the frame (1); and
a counter (4) connected to the movable part (32) and comprising a rotating arm (41) adapted to be driven by the mating assembly (2) to switch between an initial position and a counting position during a process of the movable part (32) being pushed in relative to the frame (1).

2. The electrical cabinet (100) of claim 1, **characterized in that** the mating assembly (2) comprises a mounting member (21) disposed on the frame (1) and a driving member (22) connected to the mounting member (21), and the rotating arm (41) is adapted to be driven by the driving member (22) during the process of the movable part (32) being pushed in relative to the frame (1).

3. The electrical cabinet (100) of claim 2, **characterized in that** the mounting member (21) comprises at least two first mounting holes (211) spaced apart in a first direction (X), the frame (1) comprises a plurality of mating holes (11) spaced apart in the first direction (X), and a spacing between adjacent ones of the at least two first mounting holes (211) is equal to a spacing between adjacent ones of the plurality of mating holes (11).

4. The electrical cabinet (100) of claim 2 or 3, **characterized in that** a part of the counter (4) is disposed in the movable part (32), the movable part (32) comprises a first side plate (321), a second side plate (322), a third side plate (323) and a fourth side plate (324), the first side plate (321) and the second side plate (322) are disposed opposite to each other, the third side plate (323) and the fourth side plate (324) are disposed opposite to each other, the first side plate (321) comprises a through hole (3211), the rotating arm (41) passes out of the movable part (32) through the through hole (3211) and is adapted to rotate in the through hole (3211).

5. The electrical cabinet (100) of any of claims 2-4, **characterized in that** the mounting member (21) further comprises a second mounting hole (212), and the driving member (22) is mated with the second mounting hole (212) and adapted to pass out of the second mounting hole (212).

6. The electrical cabinet (100) of claim 5, **characterized in that** an end of the driving member (22) passing out of the second mounting hole (212) is mated with an end of the rotating arm (41) passing out of the through hole (3211) and spaced apart from an outer side surface of the first side plate (321).

7. The electrical cabinet (100) of claim 4, **characterized in that** the second side plate (322) comprises at least one first wiring part (3221), and the fixing part (31) comprises at least one second wiring part (311),
wherein when the at least one first wiring part (3221) is moved into contact with the at least one second wiring part (311), the driving member (22) and the rotating arm (41) are spaced apart from each other.

8. The electrical cabinet (100) of claim 4, **characterized in that** the second side plate (322) comprises at least one first wiring part (3221), and the fixing part (31) comprises at least one second wiring part (311),
wherein when the at least one first wiring part (3221) is moved into contact with the at least one second wiring part (311), the driving member (22) is in contact with the rotating arm (41).

9. The electrical cabinet (100) of claim 8, **characterized in that** the third side plate (323) and the fourth side plate (324) are disposed in a direction in which the movable part (32) is pulled out, the third side plate (323) comprises a plurality of third wiring parts (3231), the fixing part (31) comprises a plurality of fourth wiring parts (312),
wherein when the plurality of third wiring parts (3231) are moved to be conducted with the plurality of fourth wiring parts (312), the rotating arm (41) is driven to the counting position.

10. The electrical cabinet (100) of any of claims 4, 7-9, **characterized in that** the counter (4) is disposed closer to the fourth side plate (324) than to the third side plate (323).
